# FASCICULE DE BREVET EUROPEEN

(11) **EP 3 237 232 B1**
(45) Date de publication et mention de la délivrance du brevet: **06.02.2019**
(21) Numéro de dépôt: 15813434.6
(22) Date de dépôt: 18.12.2015
(51) Int. Cl.: B60C 11/03, B60C 11/12

(54) **BANDE DE ROULEMENT POUR PNEU HIVERNAL POIDS LOURD**
LAUFFLÄCHE FÜR WINTERREIFEN EINES SCHWERLASTFAHRZEUGS
TREAD FOR HEAVY TRUCK WINTER TYRE

(30) Priorité: 23.12.2014 FR 1463519
(43) Date de publication de la demande: 01.11.2017
(73) Titulaire: Compagnie Générale des Etablissements Michelin, 63000 Clermont-Ferrand (FR); Michelin Recherche et Technique S.A., 1763 Granges-Paccot (CH)
(72) Inventeur: MARLIER, Fabien, 63040 Clermont Ferrand Cedex 9 (FR); BARDIN, Damien, 63040 Clermont Ferrand Cedex 9 (FR)
(74) Mandataire: Diernaz, Christian
(86) Numéro de dépôt international: PCT/EP2015/080438
(87) Numéro de publication internationale: WO 2016/102350

(56) Documents cités:
- EP-A2- 1 120 295
- EP-A2- 2 108 531
- FR-A1- 2 763 892
- JP-A- H0 648 124
- JP-A- 2005 153 655
- US-A1- 2013 153 100

## Description

### DOMAINE DE L'INVENTION

L'invention concerne les bandes de roulement pour pneus et plus particulièrement les dessins de sculpture de ces bandes ainsi que les pneus pourvus de telles bandes dont les performances sont améliorées dans des conditions de roulage hivernal.

### ÉTAT DE LA TECHNIQUE

De façon connue, les pneus pour véhicules poids lourd sont pourvus d'une bande de roulement dont la surface de roulement est destinée à venir en contact avec la chaussée pendant le roulage.

Pour satisfaire aux conditions de roulage sur chaussée revêtue d'eau il est formé dans la bande de roulement de chaque pneu une sculpture selon un dessin adapté, cette sculpture étant générée par des rainures et plus généralement des creux ou cavités et des découpures ayant des profondeurs et des volumes adaptées pour assurer la pérennité des performances tout au long de l'utilisation du pneu jusqu'à sa limite d'usage. Cette limite d'usage étant déterminée par les réglementations des pays dans lesquels a lieu le roulage.

Il se trouve que pour assurer de bonnes performances de sécurité sous certaines conditions de roulage, notamment de roulage hivernal, il est nécessaire de compléter le dessin de sculpture avec une pluralité d'incisions, ces incisions générant un grand nombre d'arêtes utiles pour augmenter l'adhérence sur des chaussées revêtues de glace sans toutefois affecter la rigidité de la bande.

Il est connu - voir notamment la publication WO2013015375 A1- de former des rainures inclinées d'un angle proche de 45° pour créer une pluralité de blocs, ces blocs ayant une forme allongée et pourvus d'une pluralité d'incisions pour générer de multiples arêtes. Il est cependant à noter qu'il peut se développer avec ce type de dessin de sculpture une usure dite usure irrégulière c'est-à-dire une usure qui n'est pas uniformément répartie sur toute la surface de roulement de la bande de roulement. Notamment il peut apparaître une usure plus prononcée sur la partie centrale de la bande de roulement, c'est-à-dire sur la partie de la bande qui est centrée sur le plan médian équatorial. Un autre problème rencontré avec ce type de dessin de sculpture est une certaine sensibilité aux agressions subies lors du D'autres dessins de sculpture pour bande de roulement sont divulgués dans EP-A-1120295, US-A-20130153100 et EP-A-2108531.

L'objet de l'invention est de proposer un nouveau dessin de sculpture pour bande de roulement de pneu de véhicule poids lourd combinant à la fois une haute efficacité en adhérence sur route en condition hivernale ainsi qu'une bonne résistance aux agressions tout en réduisant l'apparition d'usure irrégulière.

### Définitions :

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Plan médian équatorial : c'est un plan perpendiculaire à l'axe de rotation et passant par les points du pneu radialement les plus éloignés dudit axe. Pour une bande de roulement ce plan divise la bande dans sa largeur en deux moitiés d'égales largeurs.

Une nervure est un élément en relief formé sur une bande de roulement, cet élément s'étendant dans la direction circonférentielle et faisant le tour du pneu. Une nervure comprend deux parois latérales et une face de contact, cette dernière étant destinée à venir en contact avec la chaussée pendant le roulage.

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage.

Une bande de roulement a une épaisseur maximale PMU de matière à user en roulage ; une fois cette épaisseur atteinte soit le pneu peut être recreusé pour bénéficier de nouvelles rainures soit le pneu est remplacé par un autre pneu neuf.

Les conditions usuelles de roulage du pneu ou conditions d'utilisation sont celles qui sont définies notamment par la norme E.T.R.T.O. ou toute norme équivalente selon le pays concerné ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

### BREF EXPOSE DE L'INVENTION

La présente invention a trait à une bande de roulement pour pneu de véhicule poids lourd, cette bande de roulement ayant à l'état neuf une surface de roulement de largeur W destinée à venir en contact avec une chaussée et ayant une épaisseur de matière à user en roulage PMU.

Cette bande de roulement comprend :
- un plan médian divisant la bande en deux moitiés de bande,
- quatre rainures d'orientation générale circonférentielle formées de manière symétrique par rapport au plan médian, ces rainures ayant des profondeurs au moins égale à l'épaisseur de matière à user PMU, les deux rainures les plus proches du plan médian délimitant une région centrale ayant une largeur Lc au moins égale à 13% et au plus égale à 20% de la largeur totale W de la bande,
- de chaque côté de la bande par rapport au plan médian, une région intermédiaire délimitée par deux rainures d'orientation générale circonférentielle, chaque région intermédiaire ayant une largeur Li comprise entre 13% et 30% de la largeur W de la bande,
- une région de bord axialement à l'extérieur de chaque région intermédiaire.

Chacune des régions intermédiaires est divisée en une pluralité d'éléments de relief allongés dont les faces de contact destinées à venir en contact avec la chaussée pendant le roulage. Ces éléments de relief allongés comprennent des grands côtés et des petits côtés, et délimitent des rainures obliques ayant une largeur moyenne au moins égale à 5 mm et s'ouvrant dans les rainures circonférentielles délimitant les régions intermédiaires et inclinées selon un angle moyen compris entre 30 degrés et 60 degrés - angle mesuré par rapport à la direction circonférentielle. Ces éléments de relief allongés ont une longueur moyenne dans la direction circonférentielle égale à la longueur des petits côtés et comprise entre 50 et 70 mm ; la profondeur des rainures obliques est au moins égale à 30% de la profondeur des rainures circonférentielles.

Cette bande de roulement est telle que :
- chaque élément de relief allongé des régions intermédiaires comprend en outre une découpure interne et oblique s'étendant dans une direction égale ou proche de la direction des rainures obliques bordant cet élément de relief allongé et divisant l'élément en deux parties d'élément pour s'ouvrir sur les petits côtés de l'élément et étant formée par une partie large formant une rainure de largeur au moins égale à 25% et au plus égale à 110% de la largeur des rainures obliques et par une partie étroite formant incision de largeur inférieure à 1.5 mm, ces parties large et étroite étant dans le prolongement l'une de l'autre, et
- chaque partie étroite formant incision est prolongée radialement à l'intérieur par une partie formant canal destiné à former une nouvelle rainure après une usure prédéterminée, et
- chaque découpure interne et oblique a une profondeur totale au moins égale à 75% de l'épaisseur à user PMU.

En outre, chaque élément de relief allongé comprend une pluralité d'incisions de profondeur au moins égale à 50% et au plus égale à 100% de la profondeur des rainures obliques, ces incisions s'ouvrant dans les rainures obliques bordant les éléments allongés, ces incisions étant orientées de sorte à couper la découpure interne et oblique.

Grâce aux dispositions de l'invention, une bande de roulement est présente une région centrale ayant une bonne forme d'usure et une bonne résistance aux agressions tandis que les régions intermédiaires favorisent une bonne performance sur route enneigée grâce à ces éléments allongés orientés obliquement.

De façon avantageuse, cette bande de roulement est telle que le canal destiné à former une nouvelle rainure après usure partielle a une largeur au moins égale à 25% et au plus égale à 110% de la largeur des rainures obliques. Préférentiellement cette nouvelle rainure prend la même largeur que la partie large déjà présente à neuf.

Grâce à de telles disposition, il devient possible améliorer la pérennité des performances en adhérence avec l'usure de la bande de roulement tout en obtenant une usure régulière répartie sur toute la surface de roulement de la bande.

Avantageusement cette bande de roulement est telle que la longueur totale de chaque partie étroite formant incision est au moins égale à 30% de la longueur du grand côté de l'élément de relief allongé.

Dans une variante intéressante, et afin de réduire encore les bruits lors du roulage, cette bande de roulement est telle que les rainures obliques d'une région intermédiaire de la bande sont déphasées circonférentiellement par rapport aux rainures obliques de l'autre région intermédiaire.

Dans une autre variante intéressante, la bande de roulement est telle que les rainures obliques formées sur les parties intermédiaires sont orientées de manière à générer un dessin de sculpture directionnel, c'est-à-dire présentant un sens de roulage optimal.

Il est avantageux que toutes les rainures centrales obliques formées sur la région centrale soient inclinées selon un même angle mesuré par rapport à la direction circonférentielle, cet angle étant différent des angles des rainures obliques des régions intermédiaires.

Il est avantageux que toutes les découpures centrales obliques soient déphasées circonférentiellement et à équidistance les unes des autres.

Avantageusement, les rainures obliques de chaque région intermédiaire sont prolongées par d'autres rainures dans chaque région de bord. Préférentiellement, ces rainures additionnelles formées dans les bords font, avec la direction circonférentielle, un angle différent de l'angle des rainures obliques des régions intermédiaires. L'angle des rainures de ces régions de bord avec la direction circonférentielle est égal ou proche de 90°.

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure 1 montre une vue en plan de la surface d'une première variante d'une bande de roulement selon l'invention ;
La figure 2 montre une vue en coupe de la bande de roulement montrée avec la figure 1 ;
La figure 3 montre une deuxième variante de bande de roulement selon l'invention.

### DESCRIPTION DES FIGURES

Pour faciliter la lecture des figures, des mêmes signes de référence sont employés pour la description de variantes de l'invention dès lors que ces signes de référence renvoient à des éléments d'une même nature qu'elle soit structurelle ou bien fonctionnelle.

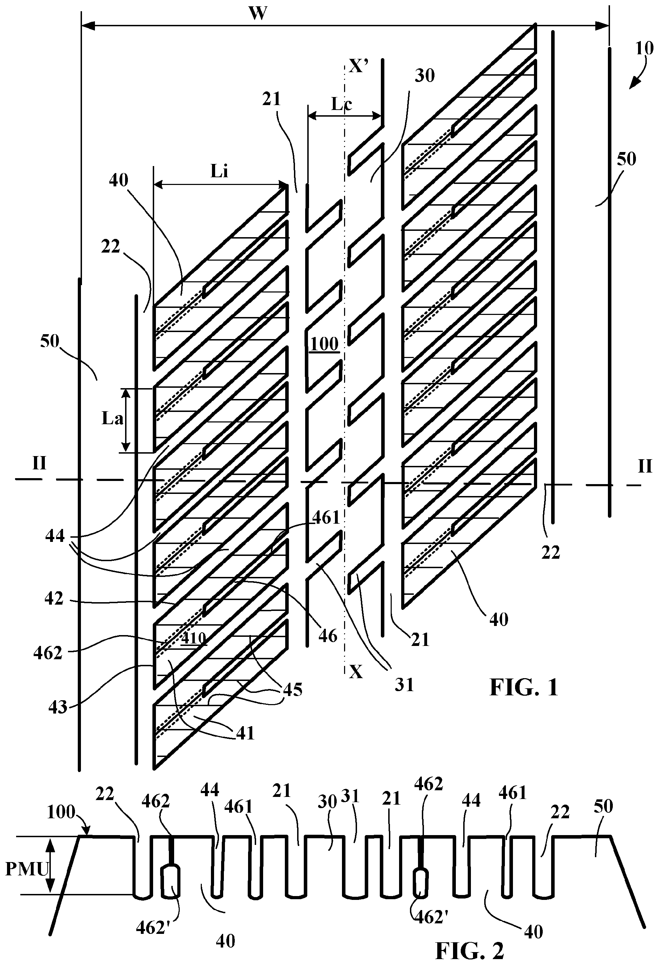

La figure 1 montre une vue en plan de la surface d'une bande de roulement selon une première variante de l'invention. Cette variante est relative à un dessin de sculpture non directionnel c'est-à-dire n'imposant pas un sens de roulage préférentiel.

Sur cette figure 1, une bande de roulement 10 pour pneu de véhicule poids lourd, cette bande de roulement ayant à l'état neuf une surface de roulement 100 de largeur W destinée à venir en contact avec une chaussée, cette bande ayant une épaisseur de matière à user en roulage PMU correspondant à l'épaisseur de matière entre la surface de roulement à l'état neuf et un niveau correspondant à une limite légale d'usure. Cette limite légale est en générale définie par une plate-forme en relief par rapport au fond de la rainure la plus profonde.

Cette bande de roulement comprend :
- un plan médian XX' divisant axialement la bande en deux moitiés de même largeur,
- quatre rainures 21, 22 d'orientation générale circonférentielle formées de manière symétrique par rapport au plan médian XX',
- les deux rainures 21 les plus proches du plan médian XX' délimitant une région 30 ayant une largeur Lc dans le cas présent égale à 15% de la largeur totale W de la bande,
- de chaque côté du plan médian XX', une région intermédiaire 40 délimitée par deux rainures 21, 22 d'orientation générale circonférentielle, chaque région intermédiaire 40 ayant une largeur Li comprise entre 13% et 30% de la largeur W de la bande,
- une région de bord 50 axialement à l'extérieur de chaque région intermédiaire 40. Ces régions de bord 50 forment dans le cas présent des nervures continues circonférentiellement.

Chaque région intermédiaire 40 est divisée en une pluralité d'éléments de relief allongés 41 (par allongé on entend un élément dont la face de contact avec la chaussée est de forme rectangulaire) dont les faces de contact 410, destinées à venir en contact avec la chaussée pendant le roulage, comprennent des grands côtés 42 et des petits côtés 43, ces éléments allongés 41 délimitant des rainures obliques 44, ces rainures obliques s'ouvrant dans les rainures circonférentielles 21, 22 délimitant les régions intermédiaires et étant inclinées selon un angle moyen égal dans le cas présent à 40 degrés - angle mesuré par rapport à la direction circonférentielle. Ces éléments de relief allongés 41 ont une longueur moyenne dans la direction circonférentielle égale à la longueur La des petits côtés 43 et comprise entre 50 et 70 mm, la profondeur des rainures obliques étant au moins égale à 30% de la profondeur des rainures circonférentielles 21, 22 et préférentiellement au moins 50% de la profondeur des rainures circonférentielles.

Chaque élément de relief allongé 41 comprend en outre une pluralité d'incisions 45 de largeur 0.6 mm et de profondeur au moins égale à 50% et au plus égale à 100% de la profondeur des rainures obliques 44, ces incisions 45 s'ouvrant dans les rainures obliques 44 bordant les éléments allongés 41.

En outre cette bande de roulement est telle que :
- chaque rainure oblique 44 se prolonge dans la région centrale 30 de la bande par une rainure centrale oblique 31 ne s'ouvrant que dans une rainure circonférentielle 21 et ne s'étendant pas au-delà de la moitié de la largeur Lc de la région centrale 30 ;
- chaque élément de relief allongé 41 des régions intermédiaires 40 comprend une découpure interne et oblique 46 s'étendant dans une direction égale ou proche de la direction des rainures obliques 44 bordant cet élément de relief allongé et divisant l'élément en deux parties d'élément dans la direction circonférentielle, chaque découpure interne et oblique 46 s'ouvrant sur les deux petits côtés 43 de l'élément de relief allongé,
- chaque découpure interne et oblique 46 a une profondeur totale au moins égale à 75% de l'épaisseur à user PMU et comprend une première partie formant une rainure 461 s'ouvrant dans une rainure circonférentielle de largeur égale à 50ù de la largeur des rainures obliques et une deuxième partie formant une incision 462 de largeur égale à 0.6 mm et s'ouvrant à la fois sur la surface de roulement 100 à l'état neuf et dans l'autre rainure circonférentielle délimitant le même élément de relief oblique.

Par ailleurs, les incisions 45 formées sur les éléments allongés 41 sont orientées de manière à couper la direction de la découpure interne et oblique 46. Les incisions formées sont aptes à se fermer au passage dans le contact c'est à dire à avoir leurs parois en contact au moins partiellement.

Sur la figure 2 on a représenté une coupe radiale (c'est-à-dire une coupe contenant l'axe de rotation du pneu) selon une ligne II-II montrée sur la figure 1.

On observe que les incisions 462 sont prolongées, à partir d'une profondeur égale à la moitié de la hauteur de matière à user PMU, par des canaux 462' destinés à former de nouvelles rainures après une usure partielle. Les rainures 461 ont dans le cas présent une profondeur égale à la profondeur maximale des canaux. Chaque canal a une largeur qui est sensiblement égale à la largeur de la partie large de la découpure interne et oblique 46 de manière à générer après une usure partielle une rainure appropriée pour le drainage.

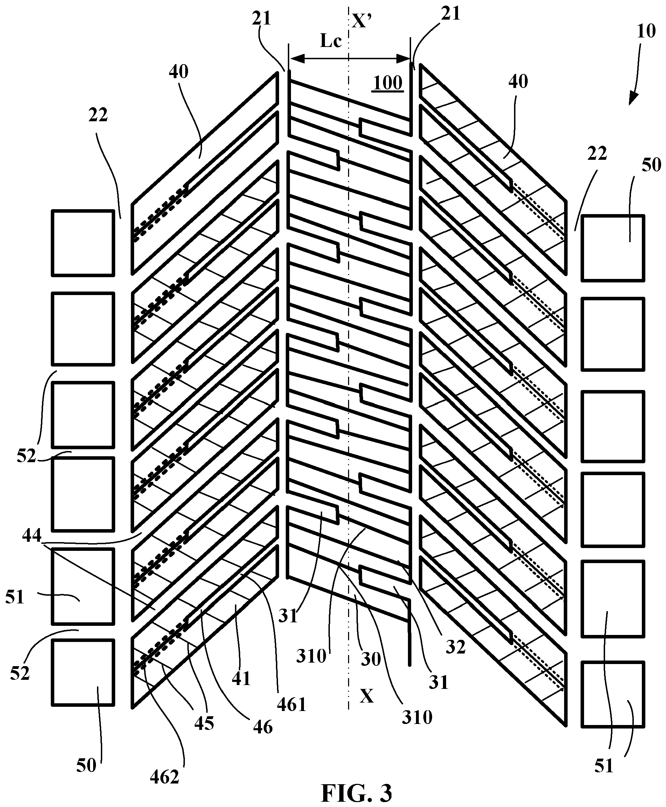

La figure 3 montre une deuxième variante de bande de roulement selon l'invention. Cette variante est relative à un dessin de sculpture directionnel c'est-à-dire présentant un sens de montage préférentiel afin de bénéficier de performances optimisées.

Pour cette variante les signes de références de la figure 1 ont été utilisés quand ils désignent des caractéristiques semblables.

On observe dans cette deuxième variante de bande de roulement 10 que les régions intermédiaires 40 sont construites de façon symétrique par rapport au plan médian XX' et qu'un déphasage circonférentiel a été généré entre ces deux régions intermédiaires. Les rainures obliques 44 d'une région intermédiaire sont déphasées par rapport aux rainures obliques 44 de l'autre région intermédiaire située de l'autre côté du plan médian XX'. Chaque région intermédiaire 40 de cette deuxième variante est construite comme la région intermédiaire de la variante montrée sur la gauche du plan médian XX' de la figure 1.

En outre la région centrale 30 comprend à la fois des rainures de prolongement 31 des rainures obliques 44, ces rainures de prolongement 31 s'ouvrant dans une seule rainure circonférentielle 21 et étant telle qu'elles ne s'étendent pas au-delà de la moitié de la largeur Lc de la région centrale. Toutes les rainures de prolongement 31 dans la région centrale 30 ont une même inclinaison qu'elles soient formées sur un bord de cette région centrale ou bien sur l'autre, cette inclinaison étant différente des inclinaisons des rainures obliques 44 des deux régions intermédiaires 40. En outre, ces rainures de prolongement 31 dans la région centrale sont elles-mêmes prolongées par des incisions 310 s'ouvrant dans une rainure circonférentielle 21. Complémentairement, des incisions 32 sont formées sur la région centrale 30, ces incisions 32 ayant une orientation identique à l'orientation des rainures de prolongement 31 et à l'orientation des incisions 310.

Dans cette variante de dessin de sculpture directionnel, les bords 50 sont entaillés par des rainures 52 prolongeant les rainures obliques 44 des régions intermédiaires 40 tout en étant orientées selon un angle égal à 90° avec la direction circonférentielle (c'est-à-dire selon un angle égal à 0° avec la direction axiale).

L'invention qui a été décrite à l'aide de ces deux variantes ne saurait être limitée à ces seules variantes et diverses modifications peuvent y être apportées sans sortir du cadre tel que défini par les revendications.

## Revendications

1. Bande de roulement (10) pour pneu de véhicule poids lourd, cette bande de roulement ayant à l'état neuf une surface de roulement (100) de largeur W destinée à venir en contact avec une chaussée, cette bande ayant une épaisseur de matière à user en roulage PMU et comprenant :
- un plan médian XX' divisant la bande en deux moitiés de bande,
- quatre rainures (21, 22) d'orientation générale circonférentielle formées de manière symétrique par rapport au plan médian,
- les deux rainures (21) les plus proches du plan médian délimitant une région centrale (30) ayant une largeur au moins égale à 13% et au plus égale à 20% de la largeur totale W de la bande,
- de chaque côté de la bande (10) par rapport au plan médian, une région intermédiaire (40) délimitée par deux rainures d'orientation générale circonférentielle, chaque région intermédiaire (40) ayant une largeur comprise entre 13% et 30% de la largeur W de la bande,
- une région de bord (50) axialement à l'extérieur de chaque région intermédiaire (40),
- chacune des régions intermédiaires (40) étant divisée en une pluralité d'éléments de relief allongés (41) dont les faces de contact (410) destinées à venir en contact avec la chaussée pendant le roulage comprennent des grands côtés et des petits côtés, ces éléments de relief allongés (41) délimitant des rainures obliques (44), ces rainures obliques ayant une largeur moyenne au moins égale à 5 mm et s'ouvrant dans les rainures circonférentielles (21, 22) délimitant les régions intermédiaires (40) et étant inclinées selon un angle moyen compris entre 30 degrés et 60 degrés, angle mesuré par rapport à la direction circonférentielle, ces éléments de relief allongés (40) ayant une longueur moyenne dans la direction circonférentielle égale à la longueur des petits côtés et comprise entre 50 et 70 mm, la profondeur des rainures obliques (44) étant au moins égale à 30% de la profondeur des rainures circonférentielles (21, 22),
- chaque élément de relief allongé (41) des régions intermédiaires (40) comprenant en outre une découpure interne et oblique (46) s'étendant dans une direction égale ou proche de la direction des rainures obliques (44) bordant cet élément de relief allongé et divisant l'élément en deux parties d'élément pour s'ouvrir sur les petits côtés de l'élément et étant formée par une partie large formant une rainure de largeur au moins égale à 25% et au plus égale à 110% de la largeur des rainures obliques (44) et par une partie étroite formant incision (462) de largeur inférieure à 1.0 mm, ces parties large et étroite étant dans le prolongement l'une de l'autre,
- chaque partie étroite formant incision (462) étant prolongée radialement à l'intérieur par une partie formant canal (462') destiné à former une nouvelle rainure après une usure prédéterminée,
- chaque découpure interne et oblique (46) ayant une profondeur totale au moins égale à 75% de l'épaisseur à user PMU ;
- chaque élément de relief allongé (41) comprenant en outre une pluralité d'incisions (45) de profondeur au moins égale à 50% et au plus égale à 100% de la profondeur des rainures obliques (44), ces incisions (45) s'ouvrant dans les rainures obliques (44) bordant les éléments allongés (41), ces incisions (45) étant orientées de sorte à couper la découpure interne et oblique (46).

2. Bande de roulement selon la revendication 1 **caractérisée en ce que** chaque canal (462') destiné à former une nouvelle rainure après usure partielle a une largeur au moins égale à 25% et au plus égale à 110% de la largeur des rainures obliques (44).

3. Bande de roulement selon l'une des revendications 1 ou 2 **caractérisée en ce que** la longueur totale des incisions (462) de chaque découpure interne et oblique (46) est au moins égale à 30% de la longueur du grand côté de l'élément de relief allongé.

4. Bande de roulement selon l'une des revendications 1 à 3 **caractérisée en ce que** les rainures obliques (44) d'une région intermédiaire (40) de la bande sont déphasées circonférentiellement par rapport aux rainures obliques de l'autre région intermédiaire.

5. Bande de roulement selon l'une des revendications 1 à 4 **caractérisée en ce que** les rainures obliques (44) formées sur les parties intermédiaires (40) sont orientées de manière à générer un dessin directionnel.

6. Bande de roulement selon l'une des revendications 1 à 5 **caractérisée en ce que** chaque rainure oblique (44) des régions intermédiaires se prolonge dans la région centrale (30) de la bande par une découpure centrale oblique (31) comprenant une partie de rainure ouverte à la fois sur la surface de roulement à l'état neuf et dans une seule rainure circonférentielle.

7. Bande de roulement selon la revendication 6 **caractérisée en ce que** toutes les rainures centrales obliques (31) formées sur la région centrale (30) sont inclinées selon un même angle mesuré par rapport à la direction circonférentielle, cet angle étant différent des angles des rainures obliques (44) des régions intermédiaires.

8. Bande de roulement selon la revendication 7 **caractérisée en ce que** les découpures centrales obliques (31) sont déphasées circonférentiellement et à équidistance les unes des autres.

9. Bande de roulement selon l'une des revendications 1 à 8 **caractérisée en ce que** les rainures obliques (44) de chaque région intermédiaire (40) sont prolongées par d'autres rainures (52) dans chaque région de bord (50).

10. Bande de roulement selon la revendication 9 **caractérisée en ce que** les rainures (52) formées dans chaque région de bord (50) sont inclinées par rapport à la direction circonférentielle de façon à faire un angle proche ou égal à 90°.

## Patentansprüche

1. Laufstreifen (10) für einen Schwerlastfahrzeugreifen, wobei dieser Laufstreifen im Neuzustand eine Lauffläche (100) mit der Breite W aufweist, die dazu bestimmt ist, mit einer Fahrbahn in Kontakt zu kommen, wobei dieser Laufstreifen eine Dicke des beim Fahren abzunutzenden Materials PMU aufweist und umfasst:
- eine Mittelebene XX', die den Laufstreifen in zwei Laufstreifenhälften aufteilt,
- vier im Wesentlichen in Umfangsrichtung verlaufende Rillen (21, 22), die symmetrisch bezüglich der Mittelebene ausgebildet sind,
- wobei die zwei Rillen (21), die der Mittelebene am nächsten sind, einen mittleren Bereich (30) mit einer Breite begrenzen, die mindestens 13 % und höchstens 20 % der Gesamtbreite W des Laufstreifens beträgt,
- auf jeder Seite des Laufstreifens (10), bezogen auf die Mittelebene, einen Zwischenbereich (40), der von zwei im Wesentlichen in Umfangsrichtung verlaufenden Rillen begrenzt wird, wobei jeder Zwischenbereich (40) eine Breite zwischen 13 % und 30 % der Breite W des Laufstreifens aufweist,
- einen Randbereich (50) axial außerhalb jedes Zwischenbereichs (40),
- wobei jeder der Zwischenbereiche (40) in mehrere lang gestreckte Profilelemente (41) aufgeteilt ist, deren Kontaktflächen (410), die dazu bestimmt sind, während der Fahrt mit der Fahrbahn in Kontakt zu kommen, große Seiten und kleine Seiten umfassen, wobei diese lang gestreckten Profilelemente (41) schräge Rillen (44) begrenzen, wobei diese schrägen Rillen eine mittlere Breite von mindestens 5 mm aufweisen und sich in die Umfangsrillen (21, 22) öffnen, welche die Zwischenbereiche (40) begrenzen, und in einem Winkel zwischen 30 Grad und 60 Grad geneigt sind, wobei der Winkel bezüglich der Umfangsrichtung gemessen wird, wobei diese lang gestreckten Profilelemente (40) eine mittlere Länge in der Umfangsrichtung aufweisen, die gleich der Länge der kleinen Seiten ist und zwischen 50 und 70 mm beträgt, wobei die Tiefe der schrägen Rillen (44) mindestens gleich 30 % der Tiefe der Umfangsrillen (21, 22) ist,
- wobei jedes lang gestreckte Profilelement (41) der Zwischenbereiche (40) außerdem einen inneren und schrägen Ausschnitt (46) umfasst, der sich in einer Richtung erstreckt, die gleich oder nahe der Richtung der dieses lang gestreckte Profilelement umrandenden schrägen Rillen (44) ist, und das Element in zwei Elementteile aufteilt, um sich auf den kleinen Seiten des Elements zu öffnen, und gebildet wird von einem breiten Teil, der eine Rille mit einer Breite von mindestens 25 % und höchstens 110 % der Breite der schrägen Rillen (44) bildet, und von einem schmalen Teil, der einen Einschnitt (462) mit einer Breite von weniger als 1,0 mm bildet, wobei dieser breite und dieser schmale Teil in der Verlängerung voneinander liegen,
- wobei jeder einen Einschnitt (462) bildende schmale Teil durch einen einen Kanal (462') bildenden Teil radial nach innen verlängert wird, der dazu bestimmt ist, nach einer vorbestimmten Abnutzung eine neue Rille zu bilden,
- wobei jeder innere und schräge Ausschnitt (46) eine Gesamttiefe aufweist, die mindestens gleich 75 % der abzunutzenden Dicke PMU ist;
- wobei jedes lang gestreckte Profilelement (41) außerdem mehrere Einschnitte (45) mit einer Tiefe von mindestens 50 % und höchstens 100 % der Tiefe der schrägen Rillen (44) umfasst, wobei sich diese Einschnitte (45) in die schrägen Rillen (44) öffnen, welche die lang gestreckten Elemente (41) umranden, wobei diese Einschnitte (45) so ausgerichtet sind, dass sie den inneren und schrägen Ausschnitt (46) schneiden.

2. Laufstreifen nach Anspruch 1, **dadurch gekennzeichnet, dass** jeder Kanal (462'), der dazu bestimmt ist, nach teilweiser Abnutzung eine neue Rille zu bilden, eine Breite von mindestens 25 % und höchstens 110 % der Breite der schrägen Rillen (44) aufweist.

3. Laufstreifen nach einem der Ansprüche 1 oder 2, **dadurch gekennzeichnet, dass** die Gesamtlänge der Einschnitte (462) jedes inneren und schrägen Ausschnitts (46) mindestens gleich 30 % der Länge der großen Seite des lang gestreckten Profilelements ist.

4. Laufstreifen nach einem der Ansprüche 1 bis 3, **dadurch gekennzeichnet, dass** die schrägen Rillen (44) eines Zwischenbereichs (40) des Laufstreifens bezüglich der schrägen Rillen des anderen Zwischenbereichs in Umfangsrichtung versetzt sind.

5. Laufstreifen nach einem der Ansprüche 1 bis 4, **dadurch gekennzeichnet, dass** die schrägen Rillen (44), die auf den Zwischenabschnitten (40) ausgebildet sind, so ausgerichtet sind, dass sie ein laufrichtungsgebundenes Profil erzeugen.

6. Laufstreifen nach einem der Ansprüche 1 bis 5, **dadurch gekennzeichnet, dass** jede schräge Rille (44) der Zwischenbereiche sich im mittleren Bereich (30) des Laufstreifens durch einen schrägen zentralen Ausschnitt (31) verlängert, der einen Rillenteil umfasst, der an der Lauffläche im Neuzustand und zugleich in einer einzigen Umfangsrille offen ist.

7. Laufstreifen nach Anspruch 6, **dadurch gekennzeichnet, dass** alle schrägen zentralen Rillen (31), die auf dem mittleren Bereich (30) ausgebildet sind, in demselben, bezüglich der Umfangsrichtung gemessenen Winkel geneigt sind, wobei dieser Winkel von den Winkeln der schrägen Rillen (44) der Zwischenbereiche verschieden ist.

8. Laufstreifen nach Anspruch 7, **dadurch gekennzeichnet, dass** die schrägen zentralen Ausschnitte (31) zueinander in Umfangsrichtung versetzt und äquidistant sind.

9. Laufstreifen nach einem der Ansprüche 1 bis 8, **dadurch gekennzeichnet, dass** die schrägen Rillen (44) jedes Zwischenbereichs (40) durch weitere Rillen (52) in jedem Randbereich (50) verlängert sind.

10. Laufstreifen nach Anspruch 9, **dadurch gekennzeichnet, dass** die in jedem Randbereich (50) ausgebildeten Rillen (52) bezüglich der Umfangsrichtung so geneigt sind, dass sie einen Winkel bilden, der annähernd gleich oder gleich 90° ist.

## Claims

1. Tread (10) for a heavy vehicle tyre, this tread having, in the new state, a tread surface (100) of width W that is intended to come into contact with a roadway, this tread having a thickness PMU of material to be worn away during running and comprising:
- a mid-plane XX' that divides the tread into two tread halves,
- four grooves (21, 22) of circumferential overall orientation that are formed symmetrically with respect to the mid-plane,
- the two grooves (21) closest to the mid-plane delimiting a central region (30) having a width at least equal to 13% and at most equal to 20% of the total width W of the tread,
- on each side of the tread (10) with respect to the mid-plane, an intermediate region (40) that is delimited by two grooves of circumferential overall orientation, each intermediate region (40) having a width of between 13% and 30% of the width W of the tread,
- an edge region (50) axially on the outside of each intermediate region (40),
- each of the intermediate regions (40) being divided into a plurality of elongate raised elements (41), the contact faces (410) of which that are intended to come into contact with the roadway during running comprise long sides and short sides, these elongate raised elements (41) delimiting oblique grooves (44), these oblique grooves having an average width at least equal to 5 mm and opening into the circumferential grooves (21, 22) that delimit the intermediate regions (40) and being inclined at an average angle of between 30 degrees and 60 degrees, this angle being measured with respect to the circumferential direction, these elongate raised elements (40) having an average length in the circumferential direction equal to the length of the short sides and between 50 and 70 mm, the depth of the oblique grooves (44) being at least equal to 30% of the depth of the circumferential grooves (21, 22),
- each elongate raised element (41) of the intermediate regions (40) also comprising an internal and oblique cut (46) that extends in a direction equal or similar to the direction of the oblique grooves (44) bordering this elongate raised element and divides the element into two element parts so as to open onto the short sides of the element and is formed by a wide part forming a groove with a width at least equal to 25% and at most equal to 110% of the width of the oblique grooves (44) and by a narrow part forming a sipe (462) with a width less than 1.0 mm, these wide and narrow parts being in line with one another,
- each narrow part forming a sipe (462) being extended radially inwards by a part forming a channel (462') that is intended to form a new groove after a predetermined amount of wear
- each internal and oblique cut (46) having a total depth at least equal to 75% of the thickness PMU to be worn away,
- each elongate raised element (41) also comprising a plurality of sipes (45) with a depth at least equal to 50% and at most equal to 100% of the depth of the oblique grooves (44), these sipes (45) opening into the oblique grooves (44) bordering the elongate elements (41), these sipes (45) being oriented so as to intersect the internal and oblique cut (46).

2. Tread according to Claim 1, **characterized in that** each channel (462') that is intended to form a new groove after partial wear has a width at least equal to 25% and at most equal to 110% of the width of the oblique grooves (44).

3. Tread according to either of Claims 1 and 2, **characterized in that** the total length of the sipes (462) of each internal and oblique cut (46) is at least equal to 30% of the length of the long side of the elongate raised element.

4. Tread according to one of Claims 1 to 3, **characterized in that** the oblique grooves (44) of an intermediate region (40) of the tread are offset circumferentially with respect to the oblique grooves of the other intermediate region.

5. Tread according to one of Claims 1 to 4, **characterized in that** the oblique grooves (44) formed on the intermediate parts (40) are oriented so as to create a directional pattern.

6. Tread according to one of Claims 1 to 5, **characterized in that** each oblique groove (44) of the intermediate regions is extended in the central region (30) of the tread by a central oblique cut (31) comprising a groove part that is open both onto the tread surface in the new state and into a single circumferential groove.

7. Tread according to Claim 6, **characterized in that** all of the central oblique grooves (31) formed in the central region (30) are inclined at one and the same angle measured with respect to the circumferential direction, this angle being different from the angles of the oblique grooves (44) in the intermediate regions.

8. Tread according to Claim 7, **characterized in that** the central oblique cuts (31) are offset circumferentially and equidistant from one another.

9. Tread according to one of Claims 1 to 8, **characterized in that** the oblique grooves (44) of each intermediate region (40) are extended by further grooves (52) in each edge region (50).

10. Tread according to Claim 9, **characterized in that** the grooves (52) formed in each edge region (50) are inclined with respect to the circumferential direction so as to make an angle close or equal to 90°.
